# EUROPEAN PATENT SPECIFICATION

(11) **EP 0 524 568 B1**
(45) Date of publication and mention of the grant of the patent: **24.04.1996**
(21) Application number: 92112330.3
(22) Date of filing: 18.07.1992
(51) Int. Cl.: B60C 11/00, B60C 11/03

(54) **A tread with multiple pitching**
Lauffläche mit mehreren Umfanglängenänderungen der Profilelemente
Bande de roulement ayant plusieurs séquences de répartition des blocs

(30) Priority: 26.07.1991 US 736192
(43) Date of publication of application: 27.01.1993
(73) Proprietor: THE GOODYEAR TIRE & RUBBER COMPANY, Akron, Ohio 44316-0001 (US)
(72) Inventor: Graas, Maurice, L-8558 Reichlange (LU); Hitzky, Leo Joseph, L-7246 Walferdange (LU); Constant, Michel, B-6650 Bastogne (BE); Brown, Robert Walter, Medina, Ohio 44256 (US)
(74) Representative: Leitz, Paul

(56) References cited:
- EP-A- 0 114 594
- EP-A- 0 192 911
- EP-A- 0 479 761
- EP-A- 0 479 763
- US-A- 1 956 011
- PATENT ABSTRACTS OF JAPAN vol. 10, no. 246 (M-510)(2302) 23 August 1986 ; & JP-A-61 75 003 ( SUMITOMO )

## Description

### Background of the Invention

The invention relates to a tread for a pneumatic tire, more particularly an asymmetric tread having two distinct sets of angularly oriented pitches.

A primary concern of tire designers is tire noise. Audible sounds are created as a tire travels upon a surface. The tire designer must select a tread design that reduces harsh disagreeable sounds.

Sounds generated by a rotating tire are a form of energy transmission. When the energy transmitted is in a narrow frequency range the sound generally will be dominated by a single frequency and its harmonics. Such a tire will have a tonality, tonality being a sound generated over a narrow range of the sound frequency spectrum.

To avoid tread patterns that in use generate undesirable sound characteristics resulting from dominant frequencies, various methods have been suggested that spread the energy produced over a wide frequency range. The most commonly accepted method relates to avoiding the repetitive characteristics of the tread pattern. This method entails varying the circumferential length of design features that are repeated over the circumferential length of the tire tread. This method of modulating or varying the repetitive pattern is commonly known as pitching as is discussed in U. S. patent 4,474,223.

The utilization of asymmetric tread patterns, generally, and in particular on wide high performance passenger tires, has further complicated the noise dampening problems of the tire designer. The road contacting surface of a low aspect-ratio tire is generally short and wide, which results in a need to improve the frequency-modulating capability of the tire's tread design. That is the tread pitching must be more effective over a shorter footprint.

Document EP-A- 114 594 discloses an asymmetric tread for a tire. The tread has two sets of pitches, the sets being circumferentially continuous about the tread and differing by the pitch sequence and the total number of pitches.

It is an object of the invention to provide a tire wherein the ability of the tread to spread the sound energy generated during tire use over a wide spectrum is enhanced while at the same time the road handling performance of the tire is optimized.

### Summary of the Invention

The invention provides for an asymmetric tread as recited in claim 1. Preferred embodiments of the invention are specified in the dependent claims.

### Definitions

"Global treadwear" refers to normal treadwear, generally evenly distributed around a tire.

"Irregular treadwear" refers to uneven patterns of wear, sometimes localized on a single lug where one side of a lug wears faster than another.

"Lugs" or "block element" refers to radial rows of discontinuous tread rubber elements that make direct contact with the road surface.

"Footprint" refers to the contact patch or area of contact of the tire tread with a flat surface at zero speed and under normal load and pressure or under specified load, pressure and speed conditions.

"Shoulder" refers to the upper portion of sidewall just below the tread edge.

"Equatorial plane" refers to the plane perpendicular to the tire's axis of rotation and passing through the center of its tread.

"Axial" and "axially" are used herein to refer to lines or directions that are parallel to the axis of rotation of the tire.

"Radial" and "radially" are used to mean directions radially toward or away from the axis of rotation of the tire.

"Circumferential" means lines or directions extending along the perimeter of the surface of the annular tread perpendicular to the axial direction.

"Lateral Edge" means the axially outermost extremes of the tread.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Carcass plies" comprise parallel longitudinal reinforcing members which are wrapped around the beads.

"Crown" refers to that portion of the tire within the width area of the tread in the vicinity of the tread.

"Pitch" means a single occurrence of a design feature repeated around the circumference of a tread. The design feature includes enough of the tread pattern to constitute at least one lug or block element.

"Pitch length" means the circumferential length of a single pitch.

"Pitch Boundary" means one of the circumferential extremes of a single pitch.

### Detailed Description of the Drawing

Fig. 1 is a perspective of a tire having a tread made in accordance with the present invention.

Fig. 2A is a plan view of the tread pattern of Fig. 1 illustrating two sets of adjacent pitches.

Fig. 2B is a plan view of the tread pattern further illustrating the number of pitch lengths per set of pitches of one embodiment of the invention.

Fig. 3A-3D are enlarged views of the tread pattern illustrated in Fig. 2A and B. The enlarged views further illustrating the two sets of pitches. The combined figures 3A-3D illustrate the entire pitching of the tread as shown in Fig. 1 through 2B.

Fig. 4 is an enlarged view of a segment of the first set of pitches taken from Fig. 2B.

Fig. 5 is an enlarged view of a segment of the second set of pitches taken from Fig. 2B.

Fig. 6 illustrates alternative embodiment wherein the pitch boundaries within each set are non-parallel.

### Detailed Description of the Invention

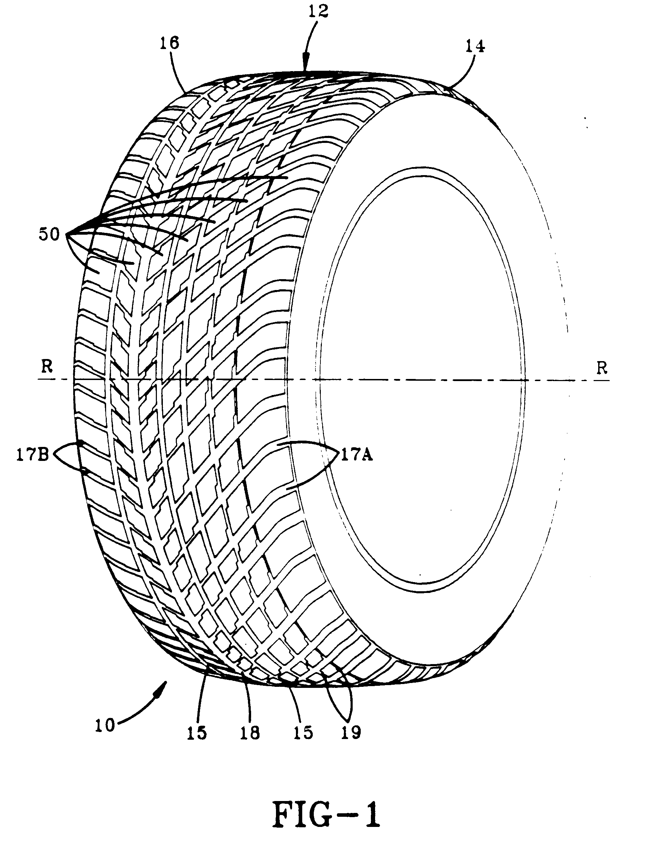

In Fig. 1, an exemplary tread 12 according to the present invention is illustrated. The tread 12 when configured annularly, as when attached to a tire, is adapted to rotate about an axis R.

The tread 12 extends circumferentially about a tire 10. The tread extends laterally between a first and a second lateral edge 14 and 16. The tread 12 has a plurality of road contacting relief elements 50. The relief elements 50 are positioned on the tread in an asymmetrical and directional pattern. The relief elements are separated by grooves 15, 17A, 17B, 18 and 19.

The relief elements are commonly called "block elements". Relief elements can include circumferential ribs. Typically a rib may be of zig-zag configuration, straight or sinusoidal in shape. Whether the relief elements are block elements or a combination of block elements and ribs, there exists a generally repeating pattern of design features. This repeating pattern is commonly called a pitch.

A pitch is a single occurrence of a design feature repeated circumferentially around a tread. Typically each pitch has a specific circumferential length between repeating design features, the length commonly being known as a pitch length.

Variation of the pitch lengths around the circumference of the tread is possible to reduce the level of noise generated by the tire during normal use. The variation and arrangement of the lengths of pitches around the circumference of the tread is described as the pitch sequence.

The pitch lengths establish the number of pitches that may be employed around the tread. Typically passenger tires have about 30 to 100 pitches, preferably from 40 to 80.

For a given pitch in a pitch sequence, the "pitch ratio" for such pitch is the ratio of its pitch length to the length of the shortest pitch in the sequence. The pitch ratio of the longest pitch to the shortest pitch for passenger tires is typically between 1.4 and 1.86.

For the purpose of clarification, the term passenger tire is intended to include tires for passenger vehicles and light trucks having a tread with a net-to-gross ratio in the range of 50-80%. The tread 12 illustrated in Fig. 1 has a net-to-gross ratio of 64%.

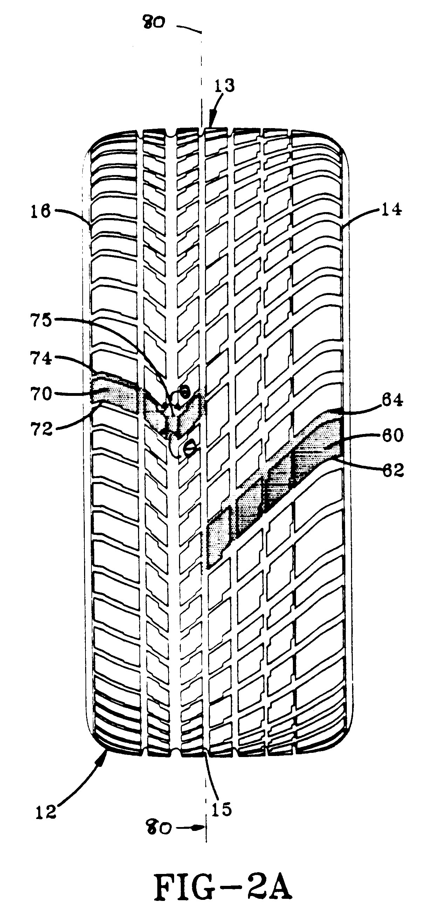

The tread 12 as further illustrated in Fig. 2A has two sets of pitches 60, 70. The first set of pitches 60 extend from a first lateral edge 14 toward a central portion 13 of the tread. The second set of pitches 70 extend from a second lateral edge 16 toward the central portion 13 of the tread. In Figure 2A a single pitch from each set is outlined by shading. The first set of pitches 60 is laterally adjacent the second set of pitches 70 and both sets join at a plane 80 perpendicular to the axis of rotation of the tire. It is important to note that the plane need not be at the equatorial plane of the tire. In the exemplary tread 12 the plane 80 is located at a distance about 55% of the tread width from the first lateral edge 14. The pitches are joined at a circumferentially extending groove 15 in the exemplary tread 12.

According to the present invention each pitch has first and second pitch boundaries. These pitch boundaries define the circumferential extent of a pitch, the first and second pitch boundaries for the first pitch 60 being designated 62, 64, the pitch boundaries for the second pitch 70 being designated 72, 74. Each pitch boundary forms an acute angle with the plane 80 in the range of 20° to 70° over a majority of the boundary length.

The exemplary tread shown in Fig. 2A has first and second pitches with circumferentially parallel first and second boundaries. The second pitch boundaries extend from the second lateral edge 16 at an acute angle each of about 33° from the lateral edge 16 a distance equal to about 33% of the TW. At that location, between 33% to the plane 80, the boundaries change angular orientation wherein the boundaries of the second pitch 70 are angularly similar to the orientation of the boundaries of the first pitch 60. The second pitch boundaries 72, 74 respectively include an angle θ in the boundary in the range from 30° to 150°.

As can be observed from Fig. 2A the pitch boundaries are generally curved with the second pitch boundaries 72, 74 having a curvature with an inflection point 75 where the curvature reverses direction.

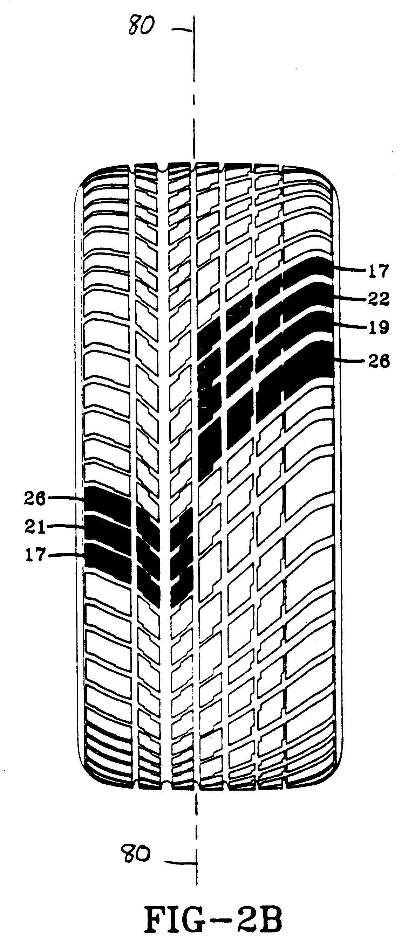

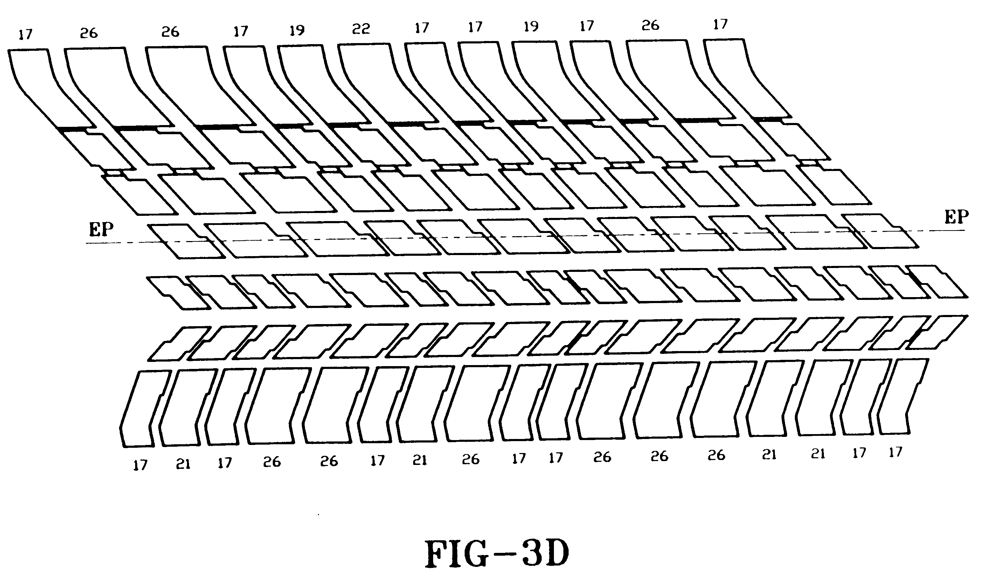

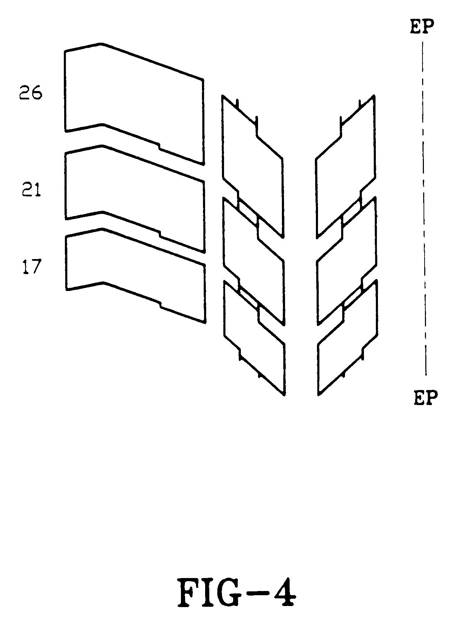

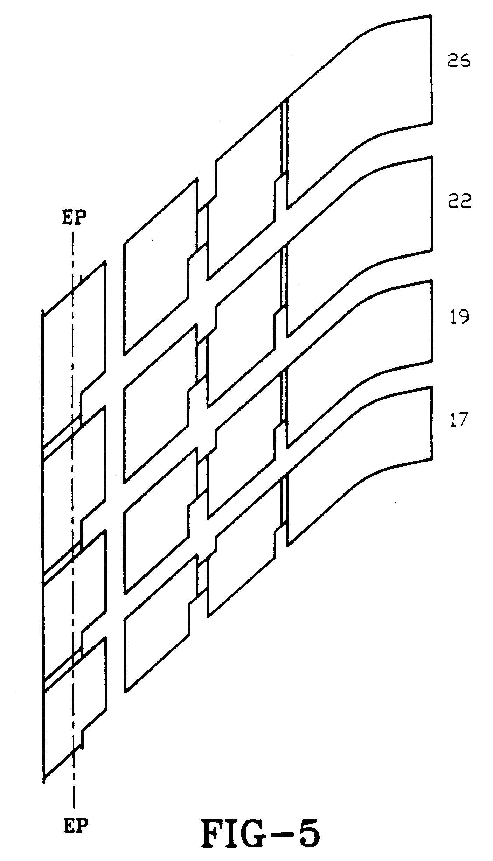

As further illustrated in Figures 2B and 4 the pitches of the second set have three different pitch lengths having relative sizes of 17, 21, and 26. As shown in Fig. 2B and 5 the pitches of the first set include four pitch lengths having relative sizes of 17, 19, 22, and 26. The relative sizes are in non-descript units and are simply whole numbers from which the size of the pitch lengths can be determined relative to the size of associated pitch lengths of the same set.

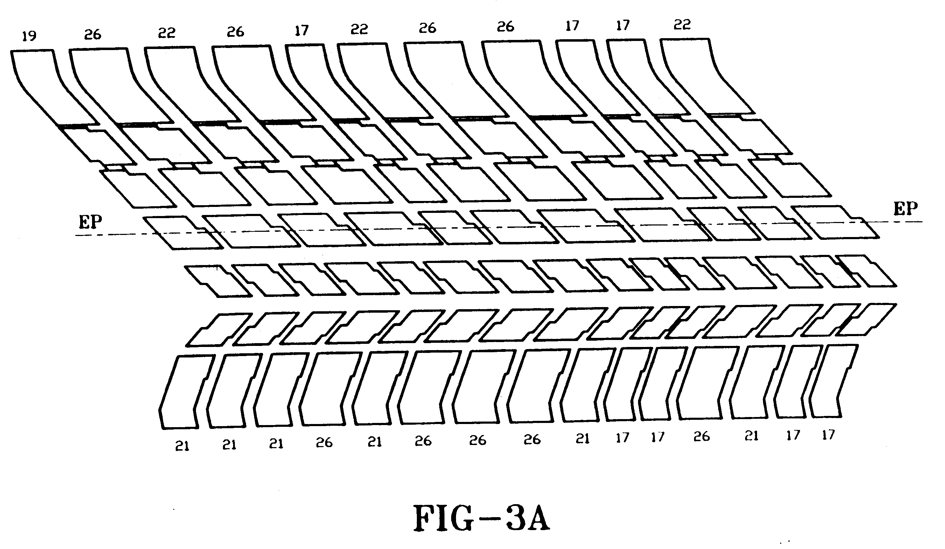

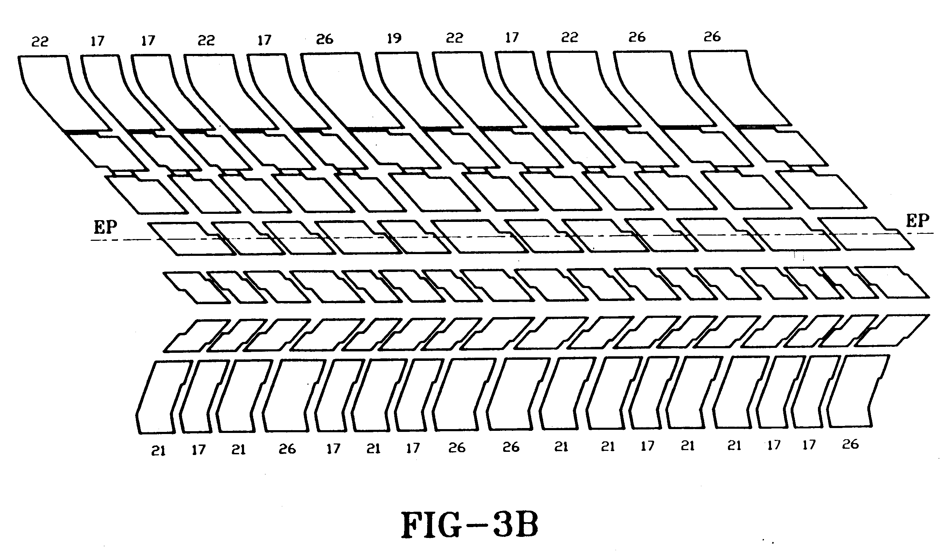

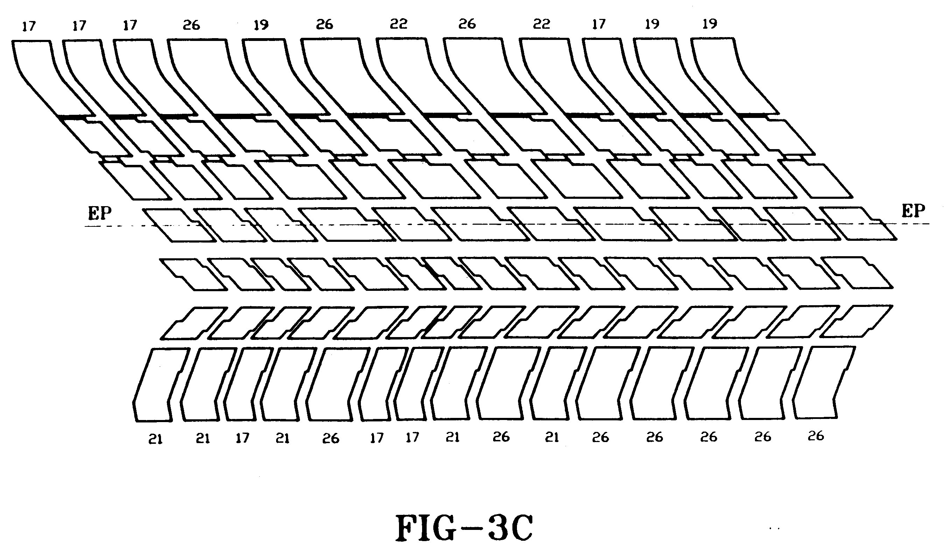

The entire pitch sequence of both sets of pitches is illustrated in Figs. 3A, 3B, 3C, and 3D. In the exemplary tread there are 64 pitches in the second set and 47 in the first set.

The 64 pitches of the second set include 20 pitches of relative size designation 17, 22 pitches of size 21, and 22 pitches of size 26. The entire circumference of the tire is accordingly circumscribed by 1374 total relative size units. The 47 pitches of the first set include 17 pitches of relative size 17, 7 pitches of size 19, 10 pitches of size 22, and 13 pitches of relative size 26. The circumference of the tire is circumscribed by 980 total relative size units.

The 64 pitches of the second set of pitches has pitch lengths having relative sizes of 17, 21, 26. If the letters S, M and L used to designate the small, medium and large pitch lengths, the pitch sequence of the second set according to the preferred embodiment is shown from left to right in Figures 3A through 3D as follows:
MMMLMLLLMSSLMSSMSMLSMSLLMMSMMSSLMMSMLSSMLMLLLLLSMSLL SMLSSLLLMMSS.

The 47 pitches of the first set of pitches has four different pitch lengths having relative sizes of 17, 19, 22 and 26. If the letter A, B, C and D are used to represent the range from small to large pitch lengths in sequential order from left to right in Figs. 3A through 3D, the preferred pitch sequence of the first set of pitches is arranged as follows:
BDCDACDDAACCAACADBCACDDAAADBDCDCABBADDABCAABADA.

The two foregoing sequences generate tread noise having complementary frequency spectra. The sequences are chosen so that the total sound energy is spread as uniformly as possible over the audio frequency spectrum when the two spectra are combined in the first and second portion of a tire that is rotated over a road surface.

As previously noted, the sets of pitches may vary or differ from one another in one or more ways.

Each set of pitches preferably should have a unique pitch sequence. The sequence should be independent of the other set but complementary with regard to overall noise dampening effect. The exemplary tread 12 illustrated in Figs. 1 through 5 employed two unique and independent pitch sequences.

As further illustrated, the pitches of the first and second set may be different in the total number of pitches used within each set. For passenger tires the total number of pitches is usually within a range of 30 to 100 pitches, preferably from 40 to 80. The exemplary tread 12 employed a first set of pitches 60 totaling 47 pitches and a second set of pitches 70 totaling 64 pitches. The first set 60 having 17 less pitches than the second set 70.

The tread also, may employ two sets of pitches, with pitches of differing lengths.

The tread 12 employed relative pitch lengths of 17, 19, 22 and 26 in one set and relative pitch lengths of 17, 21, and 26 in the other set. Alternatively any number of different pitch length combinations could be used. It will be appreciated that the number of distinct pitch lengths within each set may be different. For example tread 12 employed two sets of pitches, one set having three distinct pitch lengths and the other set having four distinct pitch lengths. The tread according to the present invention may have sets that differ in practically any number of distinct pitch lengths.

Additionally the tread may have sets of pitches having pitch boundaries with different shapes or angular orientations. The selection of different shapes or angular orientation are particularly useful with asymmetrical tread patterns.

The tread 12 as illustrated in Figs. 1-5 is an example of how the tread pattern can be pitched to improve the cosmetic appearance of the tire. By orienting the second pitch boundary as illustrated in Figures 1-5 the boundaries of each set meet at a circumferential groove 15. The tread pattern gives the illusion that the tread is divided into two regions at the wide asymmetrical groove 18, when in fact the pitching boundaries of the two set are actually joined closer to the center of the tread 12.

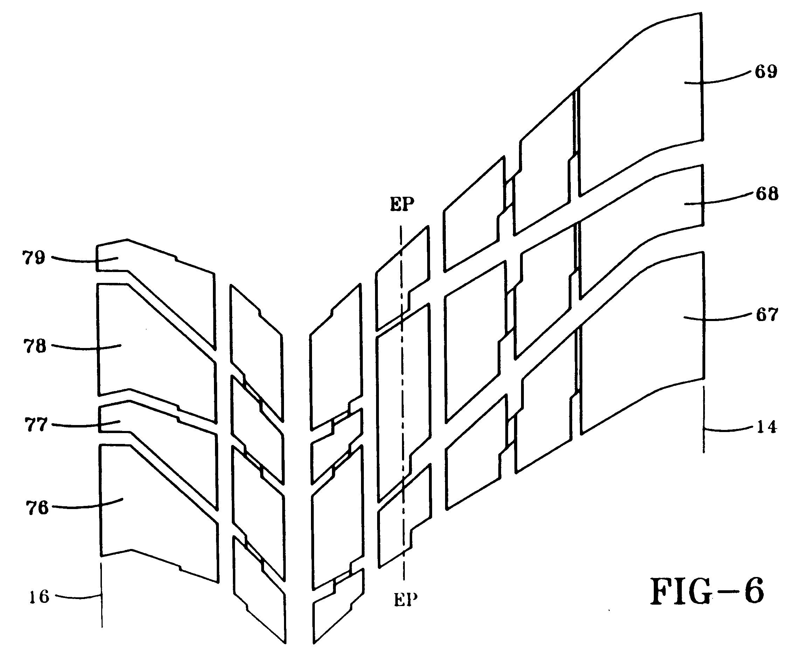

In Figure 6 an alternative pitch pattern is shown wherein the pitch boundaries within a given set are not parallel. The pattern as shown alternatively has large pitch lengths as illustrated at reference numerals 76, 78, 67, and 68 at a lateral edge which narrows as the pitch extends axially inwardly and correspondingly has adjacent pitches shown at reference numerals 77, 79 and 68 that are narrow at the lateral edge and enlarge as they extend axially inwardly. The use of non-parallel pitch boundaries facilitates the use of geometrically dissimilar tread elements as is readily observable. Alternatively the variation within a pitch can be less exaggerated than as illustrated. The use of a variable pitch length as a function of axial distance form a lateral edge further enhances noise dampening capability.

The parallel or non parallel pitch boundaries which form acute angles with circumferential planes, as described in the preceding discussions can be employed to greatly enhance the noise dampening features of the tread. Angularly orientation of the pitch boundaries in a range from 20° to 70° means that, as the tire rotates, the number of pitches that are within the tire's footprint is effectively increased. This is particularly important for low-aspect ratio tires, which have footprints that are laterally wide but short in length.
The variation of tread pattern within the footprint is effectively facilitated by the angular orientation without significant increase in complexity of the pitching sequence.

The pitching concepts disclosed add cosmetic advantages to tread designs as compared to traditional pitching techniques. Traditional pitching has constant pitch lengths with parallel pitch boundaries that are perpendicular to the equatorial plane. This results in surface discontinuities at ribs and block elements that are readily observable. The angled and curved pitch boundaries with multiple pitch sequences, can avoid such observable discontinuities by insuring that the pitch boundaries terminate at lateral grooves.

The tread as illustrated in Figs. 1 through 5 is the subject of EP-A-524 561, EP-A-524 562 and EP-A-524 567. The tread in the preferred embodiment has a unique tread pattern which can include the use of circumferential grooves with a changing variation in angular orientation at the groove walls, and shoulder tread elements with a negatively oriented trailing edge surface relative to the radial direction.

Additionally the tread may employ tread elements as disclosed in US-A-4 722 378.

A test tire was constructed according to the illustrated pitch design disclosed in Figure 1 through 5. The test tire was compared to a Goodyear Eagle P275/40ZR17 high performance tire both tires being of the same size. The subjective testing indicates that tires according to the present invention are effectively quieter than the control tire at all operating speeds and noticeably quieter in the higher speed ranges.

Measured noise levels of the tires indicated that the pass by level of noise rated 73.0 dBA for the test tire and 74.0 dBA for the control tire. While very close in noise output the data is believed significant because the tread 12 of the test tire has an overall net-to-gross ratio of 64% and has two separate regions of different net-to-gross ratios, the outer shoulder region having a net-to-gross ratio of 68.4% and the inner shoulder region having a net-to-gross ratio of 59.9%. The lower net-to-gross region being about 45% of the tread width, is inherently more difficult to sound dampen. The control tire on the other hand has a single net-to-gross ratio of 65% that is basically uniform across the tread width. It is therefore believed that the use of at least two independent angularly oriented pitch sets according to the present invention enabled the tire 10 to be produced with a tread having a non uniform net-to-gross ratio across the tread width such that the combined noise output is less than a tire a higher uniform net-to-gross ratio that has been pitched using conventional pitching techniques.

## Claims

1. An asymmetric tread (12) for a tire, the tread when in an annular configuration having an axis (R), the tread having two sets of pitches (60,70), the sets being circumferentially continuous about the tread, the sets differing from one another in one or more of the following ways:
(a) pitch sequence;
(b) total number of pitches;
(c) the number of pitch lengths;
(d) the pitch boundary shape; or
(e) orientation,
the pitches of one set being laterally adjacent to the pitches of the other set, the two sets joining one another at a plane (80) perpendicular to the axis of the tread, each pitch having circumferentially-spaced first (62,72) and second (64,74) pitch boundaries, extending between the plane (80) and a lateral edge (14,16) of the tread, characterized in that the pitch boundaries (62,64,72,74) over a substantial portion of their respective lengths form acute angles (θ) in the range from 20° to 70° with the plane (80) and in that the pitches of at least one of the sets (60,70) have pitch boundaries (72,74) that respectively include an angle (θ) in the boundary in the range from 30° to 150°.

2. The tread of claim 1, wherein the pitches of at least one of the sets (60,70) have pitch boundaries (72,74) that are generally curved, the curvature including an inflection point (75) where the curvature reverses direction.

3. The tread of claim 1, wherein the first and second pitch boundaries (62,64) of the pitches in at least one of the sets (60,70) are parallel.

4. The tread of claim 1, wherein one of the two sets of pitches (60,70) has three different pitch lengths and relative sizes of 17, 21 and 26.

5. The tread of claim 4, wherein said one of the two sets of pitches (60,70) has a pitch sequence arranged as follows:
MMMLMLLLMSSLMSSMSMLSMSLLMMSMMSSLMMSMLSSMLMLLLLLSMSLLSMLSS LLLMMSS
in which S, M, and L represent small, medium and large pitch lengths respectively.

6. The tread of claim 1, wherein one of the two sets of pitches (60,70) has four different pitch lengths and relative sizes of 17, 19, 22 and 26.

7. The tread of claim 6, wherein said one of the two sets of pitches (60,70) has a pitch sequence arranged as follows: BDCDACDDAACCAACADBCACDDAAADBDCDCABBADDABCAABADA in which A, B, C and D represent the smallest to the largest pitch lengths in respective order.

## Patentansprüche

1. Asymmetrisches Profil (12) für einen Reifen, wobei das Profil, wenn in einer ringförmigen Konfiguration, eine Achse (R) aufweist, das Profil zwei Sätze von Aufteilungen (60, 70) umfaßt, wobei die Sätze umfänglich kontinuierlich um das Profil verlaufen, sich die Sätze voneinander in einer oder mehrerer der folgenden Arten unterscheiden:
(a) Aufteilungssequenz;
(b) Gesamtanzahl der Aufteilungen;
(c) der Anzahl der Aufteilungslängen;
(d) der Aufteilungsgrenzform; oder
(e) der Ausrichtung,
wobei die Aufteilungen des einen Satzes lateralwärts benachbart zu den Aufteilungen des anderen Satzes sind, sich die zwei Sätze an einer Ebene (80) treffen, welche senkrecht zu der Achse des Profils ist, wobei jede Aufteilung umfänglich beabstandete erste (62 72) und zweite (64, 74) Aufteilungsgrenzen aufweist, welche sich zwischen der Ebene (80) und einer Lateralkante (14, 16) des Profils erstrecken, dadurch gekennzeichnet, daß die Aufteilungsgrenzen (62, 64, 72, 74) über einen wesentlichen Abschnitt ihrer jeweiligen Längen spitze Winkel (θ) in dem Bereich von 20° bis 70° mit der Ebene (80) bilden und daß die Aufteilungen von zumindest einem der Sätze (60, 70) Aufteilungsgrenzen (72, 74) aufweisen, welche jeweils einen Winkel (θ) an der Grenze einschließen in dem Bereich von 30° bis 150°.

2. Profil nach Anspruch 1, wobei die Aufteilungen von zumindest einem der Sätze (60, 70) Aufteilungsgrenzen (72, 74) aufweisen, welche generell gekrümmt sind, wobei die Krümmung einen Wendepunkt (75) aufweist, andem sich die Richtung der Krümmung umkehrt.

3. Profil nach Anspruch 1, wobei die ersten und zweiten Aufteilungsgrenzen (62, 64) der Aufteilungen in zumindest einem der Sätze (60, 70) parallel verlaufen.

4. Profil nach Anspruch 1, wobei einer der zwei Sätze der Aufteilungen (60, 70) drei unterschiedliche Aufteilungslängen und relative Größen von 17, 21 und 26 aufweist.

5. Profil nach Anspruch 4, wobei der eine der zwei Sätze von Aufteilungen (60, 70) eine Aufteilungsfolge aufweist, welche wie folgt angeordnet ist:
MMMLMLLLMSSLMSSMSMLSMSLLMMSMMSSLMMSMLSSMLMLLLLLSMSLLSMLSSLLLMMSS
wobei S, M bzw. L kleine, mittlere bzw. große Aufteilungslängen repräsentieren.

6. Profil nach Anspruch 1, wobei einer der zwei Sätze von Aufteilungen (60, 70) vier verschiedene Aufteilungslängen und relative Größen von 17, 19, 22 und 26 aufweist.

7. Profil nach Anspruch 6, wobei der eine der zwei Sätze von Aufteilungen (60, 70) eine Aufteilungsfolge aufweist, welche wie folgt angeordnet ist:
BDCDACDDAACCAACADBCACDDAAADBDCDCABBADDABCAABADA,
wobei A, B, C und D die kleinsten bis größten Aufteilungslängen in dieser Reihenfolge repräsentieren.

## Revendications

1. Bande de roulement asymétrique (12) pour un bandage pneumatique, la bande de roulement, lorsqu'elle est de configuration annulaire, comportant un axe (R), la bande de roulement possédant deux jeux de pas (60, 70), les jeux étant continus en direction circonférentielle autour de la bande de roulement, les jeux différant l'un de l'autre d'une ou de plusieurs des manières ci-après :
(a) la séquence des pas;
(b) le nombre total des pas;
(c) le nombre des longueurs de pas;
(d) la configuration des limites de pas; ou
(e) l'orientation,
les pas d'un jeu étant adjacents en direction latérale aux pas de l'autre jeu, les deux jeux se reliant mutuellement dans un plan (80) perpendiculaire à l'axe de la bande de roulement, chaque pas possédant des première et seconde limites de pas (62, 72; 64, 74) espacées en direction circonférentielle, s'étendant entre le plan (80) et un bord latéral (14, 16) de la bande de roulement, caractérisée en ce que les limites de pas (62, 64, 72, 74) sur une portion importante de leurs longueurs respectives formant des angles aigus (θ) dans le domaine de 20° à 70° avec le plan (80), et en ce que les pas d'au moins un des jeux (60, 70) possèdent des limites de pas (72, 74) qui englobent respectivement un angle (θ) formé par la limite dans le domaine de 30° à 150°.

2. Bande de roulement selon la revendication 1, dans laquelle les pas d'au moins un des jeux (60, 70) possède des limites de pas (72, 74) qui sont généralement courbes, la courbure englobant un point d'inflexion (75) où la courbure change de direction.

3. Bande de roulement selon la revendication 1, dans laquelle les première et seconde limites de pas (62, 64) dans au moins un des jeux de pas (60, 70) sont parallèles.

4. Bande de roulement selon la revendication 1, dans laquelle un des deux jeux de pas (60, 70) possède trois longueurs de pas différentes et des dimensions relatives de 17, 21 et 26.

5. Bande de roulement selon la revendication 4, dans laquelle ledit jeu parmi les deux jeux de pas (60, 70) possède une séquence de pas arrangée comme suit :
MMMLMLLLMSSLMSSMSMLSMSLLMMSMMSSLMMSMLSSMLMLLLLLSMSLLSMLSSLLL MMSS
dans laquelle S, M et L représentent des longueurs de pas petites, moyennes et grandes, respectivement.

6. Bande de roulement selon la revendication 1, dans laquelle un des deux jeux de pas (60, 70) possède quatre longueurs de pas différentes et des dimensions relatives 17, 19, 22 et 26.

7. Bande de roulement selon la revendication 6, dans laquelle ledit jeu parmi les deux jeux de pas (60, 70) possède une séquence de pas arrangée comme suit :
BDCDACDDAACCAACADBCACDDAAADBDCDCABBADDABCAABADA
dans laquelle A, B, C, et D représentent les longueurs de pas minimale à maximale, dans l'ordre respectif.
